# EUROPEAN PATENT SPECIFICATION

(11) **EP 2 779 701 B1**
(45) Date of publication and mention of the grant of the patent: **15.05.2019**
(21) Application number: 13001337.8
(22) Date of filing: 15.03.2013
(51) Int. Cl.: H04W 4/50

(54) **Method Of Converting An Application Of A Mobile Device Into A Distraction-Free Mode**
Verfahren zur Umwandlung einer Anwendung eines mobilen Gerätes in einen ablenkungsfreien Modus
Procédé de conversion d'une application d'un dispositif mobile dans un mode sans distraction

(43) Date of publication of application: 17.09.2014
(73) Proprietor: Magna Electronics Solutions GmbH, 35578 Wetzlar (DE)
(72) Inventor: Muresan, Gabriel Felician, D-35578 Wetzlar (DE); Fischenich, Marc, D-35578 Wetzlar (DE)
(74) Representative: Ricker, Mathias

(56) References cited:
- US-A1- 2008 005 105
- US-A1- 2009 322 943
- "Mirror Link", , 14 March 2013 (2013-03-14), XP055077776, Retrieved from the Internet: URL:http://www.mirrorlink.com/ [retrieved on 2013-09-05]

## Description

### BACKGROUND OF THE INVENTION

### 1. Field of the Invention

The present invention relates to the conversion of an interface of an Application. In particular, the present invention relates to a method of converting an interface of an Application of a mobile device into a distraction-free mode.

### 2. Description of the Related Art

Mobile devices such as smart phone or iPad can download various applications (APPs). A user can utilize a user interface of the mobile devices to control the APPs, such as watching visual display, updating facebook or twitter profiles, etc.

More and more motor vehicles are equipped with a "head unit" or an "infotainment system" having a user interface, which includes various components such as a screen, speakers or keypad. Extending APPs from the mobile devices to the head unit have become a popular feature offered by vehicle manufactures because the user can take advantage of better user interface components offered by the head unit. However, most available solutions of integration of the APPs into the head unit or the infotainment system are proprietary and bounded to certain vehicle manufacturers, such as the "iDrive" from BMW or the "Media Interface Plus" from Mercedes Benz. Furthermore, they are very expensive because of the software development effort. In addition, only a few APPs that mimic the most commonly used functions are available because the vehicle manufacturers want to keep the APPs safe to use in the vehicles, particular during driving. Moreover, if new APPs of mobile devices come from the market, it will take time for the vehicle manufacturers to re-implement the Apps into the head unit in a distraction-free mode, and the end-user may lose its satisfaction with the head unit.

Another trend is to reflect the whole display of the APPs of mobile devices into the head unit. For example, a solution called MirrorLink™ uses Virtual Network Computing (VNC) as the basic protocol to display the user interface of the smartphone APPs on the infotainment system screens and to communicate user input back to the mobile device. Therefore, the user is able to use his/her APPs on the head unit as he/she is accustomed to. However, not all APPs of the mobile devices can be converted because the APPs must be certified by MirrorLink™. Thus, the end-user is incapable to use their APPs which are not certified by MirrorLink™ on the head unit. In addition, even if an APP is safe for using in the vehicle and does not cause driver distraction, if it is not certified by MirrorLink™ then it cannot be used.

The Car Connectivity Consortium MirrorLink™ document CCC-TS-002 (version 1.0.3) discloses on page 15 some information on support for multiple client profiles and the utilization of a profile identifier to access parameter settings related to different client profiles. These parameter settings can be utilized in an implementation specific manner.

The American patent application document US 2008/0005105 A1 discloses a system that can analyze a multi-dimensional input thereafter establishing a search query based upon extracted features from the input. An image can be used as an input to a search mechanism. Pattern recognition and image analysis can be applied to the image thereafter establishing a search query that corresponds to features extracted from the image input. The system can also facilitate indexing multi-dimensional searchable items thereby making them available to be retrieved as results to a search query. The system can employ text analysis, pattern and/or speech recognition mechanisms to extract features from searchable items. These extracted features can be employed to index the searchable items.

The American patent application document US 2009/0322943 A1 discloses a telop display system including an extracting module which extracts a telop region identified as an image of a telop from video image information of a television program, an image analyzing module which performs image analysis related to coordinates, a size, and a color scheme of the telop region extracted by the extracting module, a semantic analyzing module which performs text analysis related to a word class and a meaning of the obtained character string, and a classifying module which classifies the telop on the basis of an analysis result of at least one of the image analysis and the text analysis to accumulate character strings of the telops as items of text information classified in units of categories.

Therefore, the approach for converting the APPs on mobile device into a vehicle in a distraction-free mode needs further improvement to make sure that user's concentration won't be disturbed by the huge amount of icons and menus, a lot of information in form of text and image in the APPs while driving.

### SUMMARY OF THE INVENTION

The purpose of the present invention is to overcome the shortcomings explained above and to provide a method of converting an APP of a mobile device into a distraction-free mode. Therefore, the present invention is to provide a method of converting an APP of a mobile device into a distraction-free mode, comprising the following steps: (a) recognizing a control element within the APP based on an image of the APP on the mobile device and a position of the control element; (b) recognizing a content information of the control element by a character recognition unit; (c) generating a layout description including the control element, the position and the content information of the control element by a control handler and transmitting the layout description to a graphical user interface (GUI) engine; and (d) rebuilding an user interface of the APP into the distraction-free mode via the GUI engine.

Another preferred object of the invention is that said character recognition unit recognizes the content information of the control element via Optical Character Recognition (OCR) method.

Another preferred object of the invention is that said layout description is stored in the information unit as a XML, XAML or a text file.

Another preferred object of the invention is that said distraction-free mode is adapted to a specific user requirement in design of form, size or numbers of the control elements.

Another preferred object of the invention is that said mobile device is a smart phone, an iPad, a tablet computer or an e-paper.

Another preferred object of the invention is that when the APP is converted from the mobile device to the distraction-free mode in an information unit, the method further comprises a step (a-1) before the step (a): transmitting an image of the APP from the mobile device to the information unit, and the steps (a) to (d) are performed in the information unit.

Another preferred object of the invention is that said transmitting the image of the APP from the mobile device to the information unit is via USB, WiFi, Radio Frequency IDentification (RFID) or Bluetooth transmission technique.

Another preferred object of the invention is that said image of the APP on the mobile device is transmitted as a JPG, BMP or RAW file.

Another preferred object of the invention is that said information unit is installed in a vehicle, and the said information unit is a head unit or an infotainment system. Furthermore, the information unit is able to provide information to a user in a visual or audible form. Furthermore, the vehicle is a car, a boat, a marine vessel, an aircraft, a recreational vehicle, or a motorcycle.

By using the method of the present invention, the mobile device can provide distraction-free mode of the APPs when a user who needs to pay attention to his/her work and cannot be distracted by the complicated interface of the APPs. In addition, a user can always access to all APPs of his/her mobile device in an information unit, and the presentation of the APPs will be done in a distraction-free mode.

To improve understanding of the invention of the disclosure, the techniques employed in the patent invention to achieve the foregoing problems, characteristics and effects thereof are described hereinafter by the way of examples with reference to the accompanying drawings.

### BRIEF DESCRIPTION OF THE DRAWINGS

FIG. 1 shows a block diagram by which certain operations of the method of the present invention is explained.
FIG. 2 is a block diagram illustrating the certain operations of the conversion of an APP of a mobile device into a distraction-free mode in an information unit of the method of the present invention.
FIG. 3 is a flow chart illustrating an example of processing steps of FIG. 1.
FIG. 4 is a block diagram depicting image analysis of the APP on a mobile device.
FIG. 5 is a block diagram showing the conversion between the APP of a mobile device and the distraction-free mode on the interface of the information unit.

### DETAILED DESCRIPTION OF THE PREFERRED EMBODIMENTS

In the following detailed description, only certain exemplary embodiments of the present invention are shown and described, by way of illustration. As those skilled in the art would recognize, the described exemplary embodiments may be modified in various way all without departing from the spirit or scope of the present invention. Accordingly, the drawing and description are to be regarded as illustrative in nature, and not restrictive.

The technical contents of the present invention will become apparent with the detailed description of preferred embodiment.

The purpose of the invention is to convert the APPs of the mobile device into a distraction-free mode. The term "distraction-free mode" used herein refers to a mode of the APPs where the pictures, images, or complicated menus are omitted. Only text and simplified buttons, input boxes, text fields are shown on the interface of distraction-free mode, the function of the APPs remains the same as its original mode on the mobile device. In the present invention, the distraction-free mode can be predefined to adapt to a specific user requirement in design of form, size or numbers of the control elements and text shown on the information unit. A user who needs to pay more attention to his/her work (such as driving, monitoring, controlling machines) and cannot be distracted by the complicated interface of the APP of his/her mobile device is advised to use a distraction-free mode of the APP. Conversion of an APP of a mobile device into a distraction-free mode can be performed in the original mobile device or in other devices, such as an information unit.

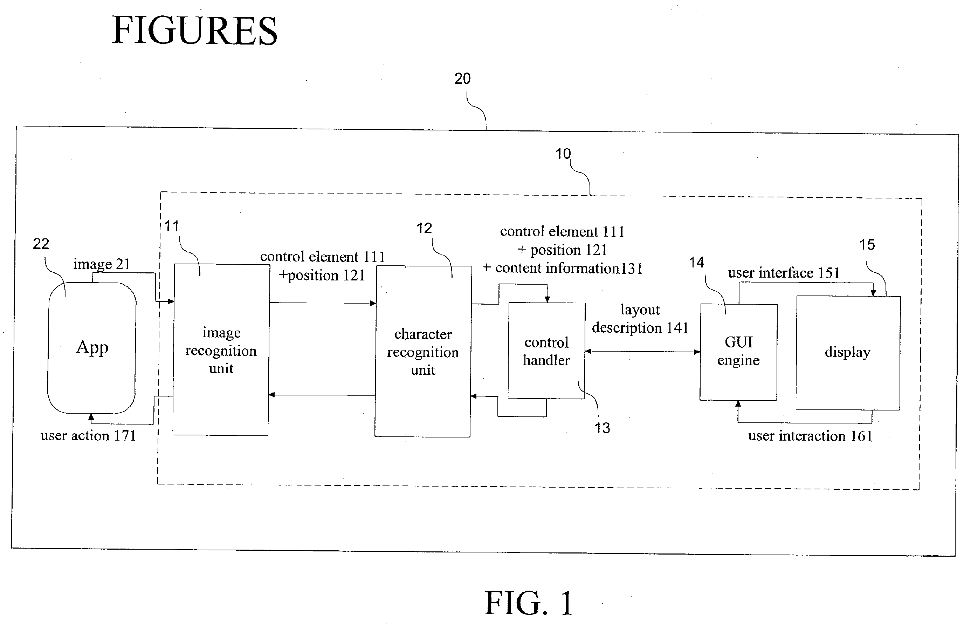

Please refer to FIG. 1, which shows certain element of an exemplary embodiment for the method of the present invention.

In the first exemplary embodiment, a system 10 (which can be called as "APP converter system" or "APP converter" hereinafter) used in the method of the present invention is contained in the mobile device 20. The term "mobile device 20" (also known as a handheld device, handheld computer or simply handheld) used herein refers to a small computing device, typically having a display screen with touch input and/or a miniature keyboard. The mobile device 20 has an operating system (OS) and can run various types of application software 22, known as App 22. Most mobile devices can also be equipped with WiFi, Bluetooth and GPS capabilities that can connect to the Internet and other Bluetooth capable devices. A camera or media player feature for video or music files can be also typically found on these devices along with a stable battery power source such as a lithium battery. Typical types of the mobile devices include but is not limit to smartphone, mobile computer, tablet computer, personal digital assistant, portable media player, digital still camera, e-paper, etc.

Turning to the illustrated embodiment in FIG. 1, the system 10 (which can be called as "APP converter system" or "APP converter" hereinafter) used in the method of the present invention comprises an image recognition unit 11, a character recognition unit 12, a control handler 13, a graphical user interface (GUI) engine 14 and a display 15, and the system can be further divided into two subsystems. The first subsystem is for analysis of the original APP 22 of the mobile device 20, and the first subsystem includes the image recognition unit 11, the character recognition unit 12 and the control handler 13. The second subsystem including the GUI engine 14 and the display 15 is for recreation of the APP 22 into a distraction-free mode to be shown on the display 15 of the mobile device 20.

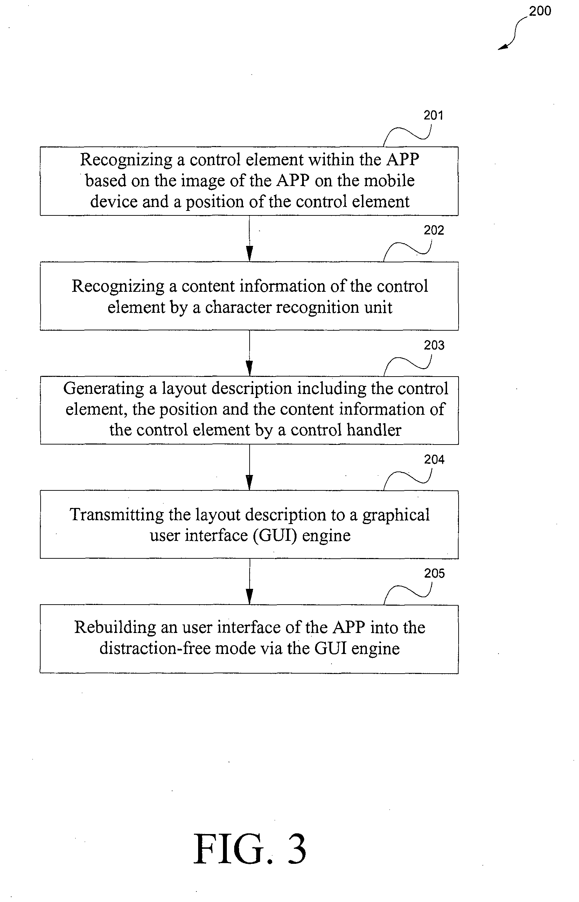

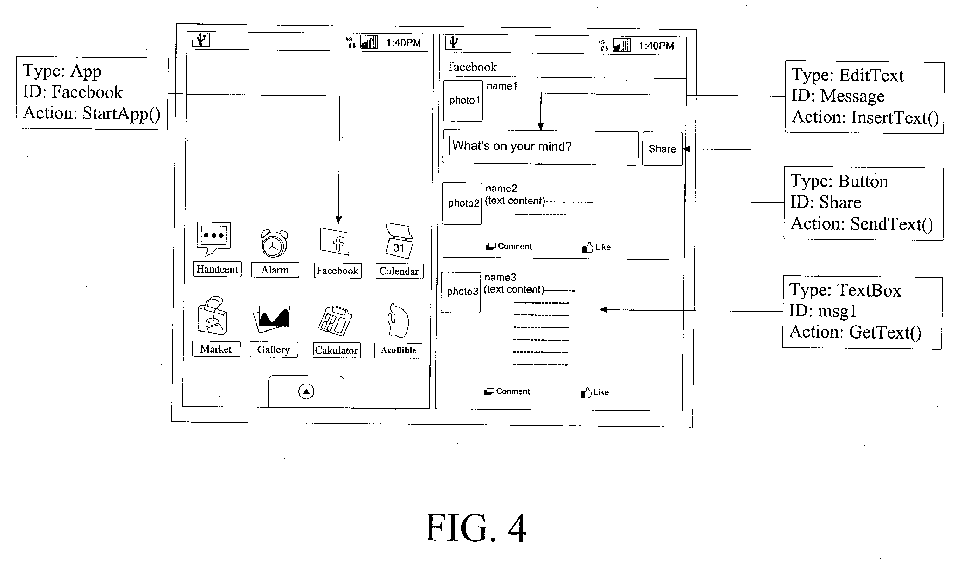

Turning to the operation of the illustrated embodiment in FIG. 1, please also refer to FIG. 3. FIG. 3 is a flow chart 200 illustrating an example of processing steps of FIG. 1. The first step is to recognize a control element within the APP 22 based on the image of the APP 22 on the mobile device 20 and a position of the control element by the image recognition unit 11 (block 201). By using the image analysis, all control elements of the APP 22 on the interface of the mobile device 20, such as buttons, input boxes, text fields, etc., are recognized and described in a defined shape regardless of the original operating system, as shown in FIG. 4. The image analysis technique is the extraction of meaningful information from the image, mainly from digital images by means of digital image processing techniques. The image analysis technique is well-known in the art and has been widely used, such as face recognition used in the digital cameras. Basically, the image recognition unit 11 consists of graphical algorithms, and the tasks of the image recognition unit 11 can be as simple as reading bar coded tags or as sophisticated as identifying human face. By this way, the control element 111 and the position 121 of the control element 111 within the APP 22 can be extracted from the image 21 of the APP 22 of its original user interface of the mobile device 20.

At the second step, in order to obtain the content information 131 of the control element 111, the control element 111 and its position 121 are transmitted to the character recognition unit 12. The term "content information" used herein includes but is not limited to a context, text, a textual content of the control element 111. The content information 131 of the control element 111 is analyzed by the character recognition unit 12 (block 202) via character recognition technique, such as Optical Character Recognition method (abbreviated as OCR). The OCR is the mechanical or electronic conversion of scanned images of handwritten, typewritten or printed text into machine-encoded text like ASCII.

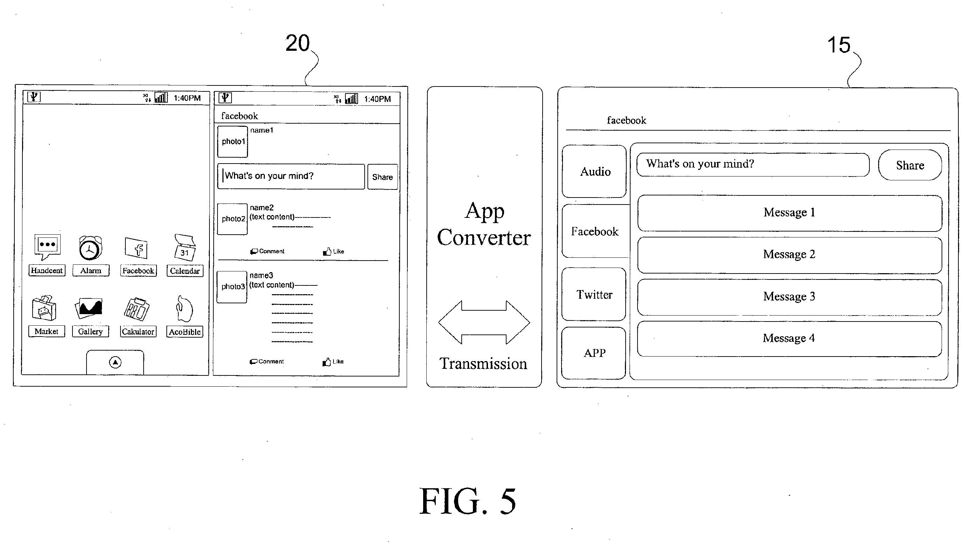

The third step is to generate a layout description 141 including the control element 111, the position 121 and the content information 131 of the control element 111 by a control handler 13 (block 203). The control handler 13 is contained in the mobile device 20. More accurately, the control handler 13 consists of a series threads functioning for controlling the process of the mobile device 20. Specifically, the layout description 141 is stored in XML, XAML or text file in the mobile device 20. When the layout description 141 is generated, it goes to the second subsystem of the system 10 to rebuild a user interface 151 of the APP 22 in a distraction-free mode on a display 15 of the mobile device 20. The layout description 141 is automatically transmitted to a graphical user interface (GUI) engine 14 (block 204). The GUI engine 14 rebuilds the user interface of the APP 22 to a specific customer requirement in the design, such as form, size and maximum number of controls per screen page, which is adjustable by the user to make sure that the user interface remains operable without distraction (block 205). As shown in FIG. 5, the original APP 22 (facebook) on the interface of the mobile device 20 is on the left side. After the conversion of the APP 22 by using the method of the present invention, a distraction-free mode is generated on the display 15 of the mobile device 20 on the right side of FIG. 5. As can be seen from FIG. 5, the distraction-free mode of the APP 22 still has the same function as its original mode, but complicated figures, pictures and menu are omitted.

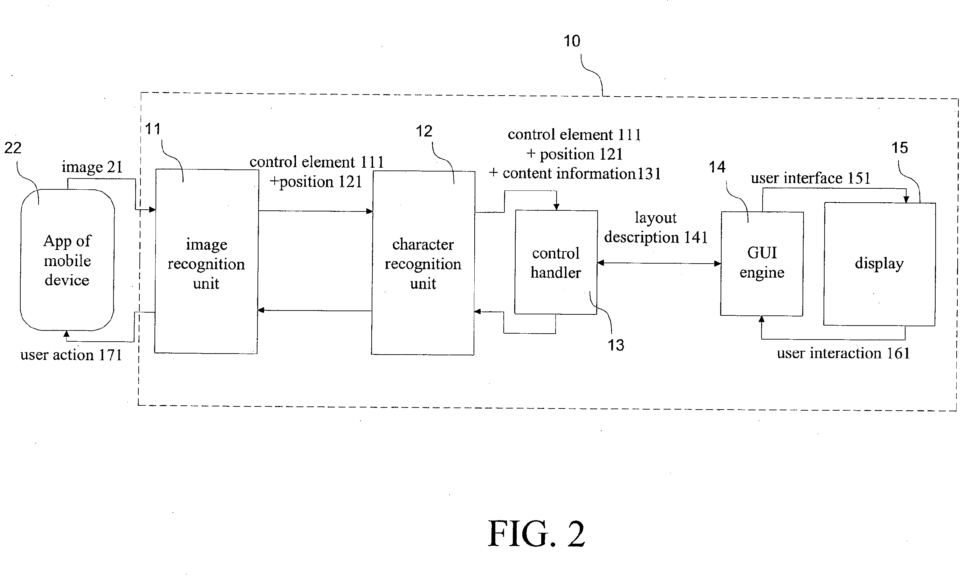

Please refer to FIG. 2, which shows certain element of another exemplary embodiment for the method of the present invention. The second embodiment of the present invention is to convert an APP 22 of a mobile device 20 into a distraction-free mode in an information unit. The difference between the first embodiment and the second embodiment lies in that the system 10 used in the method of the second embodiment is contained in the information unit and the mobile device 20 is connected to the information unit. The term "information unit" used herein refers to a device that is suitable to provide information to a user in visual and/or audible form. In a preferable embodiment, the information unit also has an operating system (OS) and can run various types of Apps. In a preferable embodiment, the information unit is a head unit installed in a vehicle. The term "vehicle" used herein includes but is not limited to a car, a boat, a marine vessel, an aircraft, a recreational vehicle, or a motorcycle.

In the second embodiment, the method further comprises transmitting an image 21 of the APP 22 from the mobile device 20 to the system 10 of the information unit. At this step, the image 21 of the interface on the mobile device 20 is photographed or projected via existing integration techniques, such as RealVNC. The RealVNC is a cross-platform remote accessing and controlling software with no agents or centralized servers required. In this way, mobile device 20 is regarded as a RealVNC server, which is used for transforming the image 21 of the APP 22 from the mobile device 20, and the information unit is regarded as a RealVNC viewer for receiving the image 21. The image 21 is transmitted from the mobile device 20 to the system 10 of the information unit via existing transmission techniques such as USB, WiFi, Radio Frequency IDentification (RFID) or Bluetooth, without limitation. More accurately, the image 21 is the user interface, or a framework of the APP 22 on the interface of the mobile device 20, and the image 21 is formatted as a JPG, BMP, RAW or other type of image file. When the image 21 is transmitted to the system 10 of the information unit, it then undergoes the same processing steps shown in FIG. 3, provided that all the steps are performed in the system 10 of the information unit. The schematic final result of the generated distraction-free mode is the same as the first embodiment as shown in FIG. 5, except that the distraction-free mode of the APP 22 is shown on the display 15 of the information unit but not the original mobile device 20. The distraction-free mode of the APP 22 still has the same function as its original mode, but complicated figures, pictures and menu are omitted.

In addition, the user interaction 161 or user entries (if the display 15 is a touchscreen, then the user interaction 161 is a touch event when the user touches the screen to give an instruction) can be sent back to the original APP 22, because the user interaction 161 to the control element 111 shown on the distraction-free mode APP 22 can be addressed directly through the knowledge of the position 121 of the control element 111. That is, when the distraction-free mode APP 22 receives a user interaction 161 from a user, the GUI engine 14 transmits the user interaction 161 to the control handler 13, and the control handler 13 addresses the interaction 161 to the application directly according to the knowledge of the position 121 of the control element 111. Therefore, the user interaction 161 is then transformed as a user action 171 to the original display on the mobile device 20. Since the information unit works as the RealVNC viewer, it then sends the user action 171 back to the mobile device 20, which works as the RealVNC server. Therefore, the APP 22 on the mobile device 20 shows the control commands according to the user action 171. All responds to the control commands are displayed on the mobile device 20 and a new image 21 is generated, which is then to be transmitted again to the information unit.

In conclusion, the method of the present invention is to convert an APP 22 into a distraction-free mode through extracting the control element 111, the position 121 and the content information 131 of the control element 111 by the image recognition unit 11 via image analysis and character recognition unit 12 via character recognition techniques and then rebuilding the user interface of the APP 22. Therefore, all kinds of APPs 22 can be transformed in a distraction-free mode.

When using the method of the present invention to convert the App 22 on the mobile device into the information unit of a vehicle, it is known that the implementation of the invention is solely within the system 10 of the information unit. No further installation is needed in the mobile device 20 because existing transmission techniques and integration techniques can be used.

The method of the present invention can be applied to various industries, such as automotive industry, consumer electronics, household appliances, etc. The method of the present invention can be programmed as a software as a kind of APP 22 and be installed in the mobile device or other devices having the APP converter system of the present invention to convert the APPs 22 into the distraction-free mode to be used when the user is working but also using the APPs 22 on the devices at the same time.

While the present invention has been described in connection with certain exemplary embodiments, it is to be understood that the invention is not limited to the disclosed embodiment, but, on the contrary, is intended to cover various modifications and equivalent arrangement include within the spirit and scope of the appended claim, and equivalent thereof.

## Claims

1. A method of converting a control element (111) of an application software (APP) (22) of a mobile device (20) into a reduced distraction mode, comprising the following steps:
(a) (201) recognizing a control element (111) within the APP (22) based on analyzing an image (21) of the APP (22) presented on a display (15) of the mobile device (20) and a position (121) of the control element (111);
(b) (202) recognizing a textual content (131) of the control element (111) by a character recognition unit (12);
(c) (203) generating a layout description (141) including the control element (111), the position (121) and the textual content of the control element (111) by a control handler (13) and (204) transmitting it to a graphical user interface (GUI) engine (14), wherein the GUI engine (14) is part of an infotainment system of a vehicle; and
(d) (205) rebuilding an user interface (151) of the APP (22) into the reduced distraction mode via the GUI engine (14).

2. The method of claim 1, wherein the character recognition unit (12) recognizes the textual content (131) via Optical Character Recognition (OCR) method.

3. The method of claim 1 or 2, wherein the layout description (141) is stored as a XML, XAML or a text file.

4. The method of any one of claims 1 to 3, wherein the reduced distraction mode is adapted to a specific user requirement in design of form, size or numbers of the control elements (111) and text.

5. The method of any one of claims 1 to 4, wherein the mobile device (20) is a smart phone, an iPad, a tablet computer or an e-paper.

6. The method of any one of claims 1 to 5, wherein when the APP (22) is to be converted from the mobile device (20) to the reduced distraction mode in an information unit, the method further comprises a step (a-1) before the step (a): transmitting an image of the APP (22) from the mobile device (20) to the information unit, and the steps (a) to (d) are performed in the information unit.

7. The method of claim 6, wherein the information unit is able to provide information to a user in a visual or audible form.

8. The method of claim 6 or 7, wherein transmitting the image (21) of the APP on the mobile device (20) to the information unit is via USB, WiFi, Radio Frequency IDentification (RFID) or Bluetooth transmission technique.

9. The method of claim 8, wherein the image (21) of the APP (22) on the mobile device (20) in step (a) is transmitted as a JPG, BMP or RAW file.

10. The method of any one of claims 6 to 9, wherein the information unit is installed in the vehicle.

11. The method of claim 10, wherein the information unit is a head unit or an infotainment system in the vehicle.

12. The method of claim 10 or 11, wherein the vehicle is a car, a boat, a marine vessel, an aircraft, a recreational vehicle, or a motorcycle.

## Patentansprüche

1. Verfahren zum Umwandeln eines Steuerelements (111) einer Anwendungssoftware (APP) (22) eines mobilen Geräts (20) in einen Modus mit verringerter Ablenkung, welches die folgenden Schritte aufweist:
(a) (201) ein Erkennen eines Steuerelements (111) innerhalb der APP (22) basierend auf einem Analysieren eines Bildes (21) der APP (22), das auf einer Anzeige (15) des mobilen Geräts (20) dargestellt wird, und einer Position (121) des Steuerelements (111),
(b) (202) ein Erkennen eines Textinhalts (131) des Steuerelements (111) durch eine Zeichenerkennungseinheit (12),
(c) (203) ein Erzeugen einer Layoutbeschreibung (141), die das Steuerelement (111), die Position (121) und den Textinhalt des Steuerelements (111) enthält, durch einen Steuerhandler (13) und (204) ein Übertragen an eine grafische Benutzeroberflächen-(GUI)-Engine (14), wobei die GUI-Engine (14) ein Teil eines Infotainmentsystems eines Fahrzeugs ist, und
(d) (205) ein Wiederherstellen einer Benutzerschnittstelle (151) der APP (22) in den Modus mit verringerter Ablenkung über die GUI-Engine (14).

2. Verfahren nach Anspruch 1, wobei die Zeichenerkennungseinheit (12) den Textinhalt (131) über ein Verfahren einer optischen Zeichenerkennung (OCR) erkennt.

3. Verfahren nach Anspruch 1 oder 2, wobei die Layoutbeschreibung (141) als ein XML, ein XAML oder eine Textdatei gespeichert ist.

4. Verfahren nach einem der Ansprüche 1 bis 3, wobei der Modus mit verringerter Ablenkung an eine spezifische Benutzeranforderung in Bezug auf eine Form, eine Größe oder eine Anzahl der Steuerelemente (111) und Text angepasst wird.

5. Verfahren nach einem der Ansprüche 1 bis 4, wobei das mobile Gerät (20) ein Smartphone, ein iPad, ein Tablet-Computer oder ein E-Paper ist.

6. Verfahren nach einem der Ansprüche 1 bis 5, wobei, wenn die APP (22) von dem mobilen Gerät (20) in den Modus mit verringerter Ablenkung in einer Informationseinheit umgewandelt werden soll, das Verfahren ferner einen Schritt (a-1) vor dem Schritt (a) umfasst: ein Übertragen eines Bildes der APP (22) von dem mobilen Gerät (20) an die Informationseinheit, und die Schritte (a) bis (d) werden in der Informationseinheit ausgeführt.

7. Verfahren nach Anspruch 6, wobei die Informationseinheit in der Lage ist, einem Benutzer Informationen in visueller oder akustischer Form bereitzustellen.

8. Verfahren nach Anspruch 6 oder 7, wobei ein Übertragen des Bildes (21) der APP auf das mobile Gerät (20) an die Informationseinheit über ein USB, ein WLAN, eine Radiofrequenz-Identifikation (RFID) oder ein Bluetooth-Übertragungsverfahren erfolgt.

9. Verfahren nach Anspruch 8, wobei das Bild (21) der APP (22) auf dem Mobilgerät (20) in dem Schritt (a) als eine JPG-Datei, eine BMP-Datei oder eine RAW-Datei übertragen wird.

10. Verfahren nach einem der Ansprüche 6 bis 9, wobei die Informationseinheit in dem Fahrzeug installiert ist.

11. Verfahren nach Anspruch 10, wobei die Informationseinheit eine Kopfeinheit oder ein Infotainmentsystem in dem Fahrzeug ist.

12. Verfahren nach Anspruch 10 oder 11, wobei das Fahrzeug ein Auto, ein Boot, ein Marineschiff, ein Flugzeug, ein Freizeitfahrzeug oder ein Motorrad ist.

## Revendications

1. Procédé de conversion d'un élément de commande (111) d'un logiciel d'application (APP) (22) d'un dispositif mobile (20) dans un mode de distraction réduite, comprenant les étapes suivantes :
(a) (201) la reconnaissance d'un élément de commande (111) à l'intérieur de l'APP (22) sur la base de l'analyse d'une image (21) de l'APP (22) présentée sur un dispositif d'affichage (15) du dispositif mobile (20) et d'une position (121) de l'élément de commande (111) ;
(b) (202) la reconnaissance d'un contenu textuel (131) de l'élément de commande (111) par une unité de reconnaissance de caractères (12) ;
(c) (203) la génération d'une description d'agencement (141) incluant l'élément de commande (111), la position (121) et le contenu textuel de l'élément de commande (111) par un gestionnaire de commande (13) et (204) sa transmission à un moteur d'interface utilisateur graphique (GUI) (14), dans lequel le moteur GUI (14) fait partie d'un système d'info-divertissement d'un véhicule ; et
(d) (205) la reconstruction d'une interface utilisateur (151) de l'APP (22) dans le mode de distraction réduite via le moteur GUI (14).

2. Procédé selon la revendication 1, dans lequel l'unité de reconnaissance de caractères (12) reconnaît le contenu contextuel (131) via un procédé de reconnaissance optique de caractères (OCR).

3. Procédé selon la revendication 1 ou 2, dans lequel la description d'agencement (141) est stockée comme un XML, un XAML ou un fichier de texte.

4. Procédé selon l'une quelconque des revendications 1 à 3, dans lequel le mode de distraction réduite est adapté à une exigence d'utilisateur spécifique dans la conception de forme, de taille ou de nombres des éléments de commande (111) et de texte.

5. Procédé selon l'une quelconque des revendications 1 à 4, dans lequel le dispositif mobile (20) est un téléphone intelligent, un iPad, un ordinateur tablette ou un papier électronique.

6. Procédé selon l'une quelconque des revendications 1 à 5, dans lequel, quand l'APP (22) doit être convertie à partir du dispositif mobile (20) au mode de distraction réduite dans une unité d'informations, le procédé comprend en outre une étape (a-1) avant l'étape (a) : la transmission d'une image de l'APP (22) du dispositif mobile (20) à l'unité d'informations, et les étapes (a) à (d) sont effectuées dans l'unité d'informations.

7. Procédé selon la revendication 6, dans lequel l'unité d'informations est capable de fournir des informations à un utilisateur sous une forme visuelle ou audible.

8. Procédé selon la revendication 6 ou 7, dans lequel la transmission de l'image (21) de l'APP sur le dispositif mobile (20) à l'unité d'informations est effectuée via USB, Wifi, une identification par radiofréquence (RFID) ou une technique de transmission Bluetooth.

9. Procédé selon la revendication 8, dans lequel l'image (21) de l'APP (22) sur le dispositif mobile (20) dans l'étape (a) est transmise comme un fichier JPG, BMP ou RAW.

10. Procédé selon l'une quelconque des revendications 6 à 9, dans lequel l'unité d'informations est installée dans le véhicule.

11. Procédé selon la revendication 10, dans lequel l'unité d'informations est une unité de tête ou une unité d'info-divertissement dans le véhicule.

12. Procédé selon la revendication 10 ou 11, dans lequel le véhicule est une voiture, un bateau, un navire, un aéronef, un véhicule récréatif ou une motocyclette.
